(19) Europäisches Patentamt
European Patent Office
Office européen des brevets

(11) Veröffentlichungsnummer: **0 432 452 B1**

(12) **EUROPÄISCHE PATENTSCHRIFT**

(45) Veröffentlichungstag der Patentschrift: **27.09.95**

(51) Int. Cl.6: **C08J 5/18**, C08L 23/12,
B29C 55/00, C08L 23/02

(21) Anmeldenummer: **90121284.5**

(22) Anmeldetag: **07.11.90**

Die Akte enthält technische Angaben, die nach
dem Eingang der Anmeldung eingereicht wurden
und die nicht in dieser Patentschrift enthalten sind.

(54) **Dreheinschlagsfolie aus Polypropylen.**

(30) Priorität: **15.11.89 DE 3937941**

(43) Veröffentlichungstag der Anmeldung:
**19.06.91 Patentblatt 91/25**

(45) Bekanntmachung des Hinweises auf die
Patenterteilung:
**27.09.95 Patentblatt 95/39**

(84) Benannte Vertragsstaaten:
**DE FR GB IT SE**

(56) Entgegenhaltungen:
EP-A- 0 115 917    EP-A- 0 148 621
EP-A- 0 164 493    EP-A- 0 288 227
EP-A- 0 298 730    EP-A- 0 298 731
US-A- 4 921 749

(73) Patentinhaber: **HOECHST AKTIENGESELL-
SCHAFT**

**D-65926 Frankfurt am Main (DE)**

(72) Erfinder: **Bothe, Lothar, Dr.**
**Kurt-Schumaker-Strasse 69E**
**W-6500 Mainz-Gonsenheim (DE)**
Erfinder: **Peiffer, Herbert, Dr.**
**Thüringer Strasse 26**
**W-6500 Mainz 21 (DE)**
Erfinder: **Schlögl, Gunter, Dr.**
**Finkenweg 2**
**W-6233 Kelkheim (DE)**
Erfinder: **Rohrka, Heinz-Werner**
**Aulgasse 2 A**
**W-6229 Kiedrich (DE)**

## Beschreibung

Die Erfindung betrifft eine transparente Dreheinschlagsfolie aus Polypropylen.

Eine besondere Art des Verschlusses von Volleinschlägen zum Zwecke der Verpackung von Verpackungsgütern ist das Drehen oder Wrappen. Bekannt ist dieses Verfahren der Verpackung insbesondere beim Volleinschlag kleinerer Verpackungsgüter, wobei insbesondere bevorzugt runde oder annähernd runde Gegenstände wie Bonbons, Flaschen, Kerzen, Dropsrollen, Schokoladen- und Marzipanriegel, Ostereier oder ähnliches häufig auf diese Art verpackt werden.

Voraussetzung für die Anwendung des Drehens ist die Eignung der Folie, die an den Drehstellen nicht ein- oder abreißen darf, andererseits aber so steif sein muß, daß beim Drehvorgang kein Schrumpfen oder Krumpeln auftritt. Nach dem Stand der Technik wird für Bonboneinschläge vorwiegend Zellglas, also regenerierte Zellulose, nicht orientiertes Polypropylen oder PVC-Folie verwendet, siehe "Verpacken mit Kunststoffen" von Günther Kühne, herausgegeben 1974, Carl-Hanser-Verlag, München, Seite 63.

In neuester Zeit wurden verschiedentlich biaxial orientierte Polypropylenfolien für die Dreheinschlagsanwendung vorgeschlagen.

Die Eignung als Dreheinschlagsfolie der biaxial orientierten Polypropylenfolien wird durch Zusatz größerer Mengen Kohlenwasserstoffharze, bevorzugt hydrierter Kohlenwasserstoffharze, erreicht. So wird in der DE-A-35 35 472 ein Harzzusatz von 10 bis 40 Gew.-% vorgeschlagen, wobei diese Folien einen Elastizitätsmodul von mehr als 3 000 MPa in jeder Orientierungsrichtung aufweisen sollen. In der EP-A-0 317 276 wird ein Zusatz von 1 bis 40 Gew.-%, bevorzugt 10 bis 25 Gew.-%, besonders bevorzugt von 15 bis 20 Gew.-%, vorgeschlagen, wobei die crease retention dieser Folie, gemessen nach ASTM D 920-49 mindestens 50 % betragen soll. Harzzusätze in größeren Mengen führen aber wegen der damit einhergehenden Ausdampfungen an den Produktionsmaschinen zu Komplikationen.

Die EP-A-0 148 621 beschreibt eine biaxial verstreckte Polypropylenfolie. Das Polypropylen enthält ein verzweigtes $\alpha$-Olefin mit mindestens 6 C-Atomen. Das Flächenstreckverhältnis liegt im Bereich von 1,2 bis 100.

Die EP-A-0 288 227 beschreibt ein Verfahren zur Herstellung von harzhaltigen Folien, in welche das Harz über ein Konzentrat eingearbeitet wird. Das Konzentrat enthält 10 bis 90 Gew.-% Kohlenwasserstoffharz und wird bei der Folienherstellung mit dem Polyolefin gemischt. Die Folien werden in eine oder in beide Richtung/en orientiert, und sie eignen sich als Dreheinschlagsfolie.

Die EP-A-0 298 731 beschreibt eine biaxial orientierte, vakuolenhaltige Folie mit einer reduzierten Dichte von $\leq 0,69$ g/cm$^3$. Die Folien werden in Längsrichtung um den Faktor 4 bis 8:1 und in Querrichtung um den Faktor 8 bis 13:1 gestreckt.

Die EP-A-0 164 493 beschreibt ein modifiziertes Polypropylen-Blend, welches für die Herstellung von biaxial orientierten Folien geeignet ist. Zur Herstellung des Blends wird Polypropylen mit einem Nukleierungsmittel und LLDPE gemischt und peroxidisch abgebaut.

US-A-4,921,749 beschreibt mehrschichtige Polypropylenfolien, deren Basisschicht aus 70 bis 97 Gew.-% Polyolefin und 3 bis 30 Gew.-% Kohlenwasserstoffharz besteht. Die Folie kann unorientiert, monoaxial orientiert oder biaxial orientiert sein. Das Beispiel gibt eine Folie an, welche längs 5:1 und quer 9:1 gestreckt ist. Die Folie hat verbesserte Barriere- und Siegeleigenschaften und kann als Dreheinschlagsfolie verwendet werden.

Die EP-A-0 298 730 beschreibt eine biaxial orientierte Polypropylenfolie aus einem Polypropylen mit einem Schmelzflußindex von 1,5 bis 18 und einem Polydispersitätsindex von 3,0 bis 5,5. Das Polypropylen mit den gewünschten Eigenschaften wird durch peroxidischen Abbau von konventionellem Polypropylen hergestellt. Die Folien werden in Längsrichtung mit einem Faktor >5,5 und in Querrichtung mit einem Faktor >10 gestreckt.

Die Aufgabe der vorliegenden Erfindung besteht darin, eine transparente Dreheinschlagsfolie aus Polypropylen zu schaffen, die preiswerter und damit wirtschaftlicher herstellbar ist, die nach dem seitlichen Eindrehen (Verzwirbeln) in der eingedrehten (verzwirbelten) Form eine hohe Stabilität aufweist, damit die eingedrehten Verpackungsgüter sich nicht durch selbständiges Aufdrehen der Folie aus der Folie herauslösen können, und die gute optische Eigenschaften aufweisen soll.

Gelöst wird diese Aufgabe durch eine Dreheinschlagsfolie der eingangs genannten Gattung, deren Kennzeichenmerkmale darin bestehen, daß sie monoaxial orientiert ist und eine bleibende Dehnung quer zur Orientierungsrichtung von größer als 45 % besitzt und durch Orientierung mit einem Streckverhältnis zwischen 4,5 und 7 erhältlich ist, wobei die bleibende Dehnung wie beschrieben in den letzten Absatz der Beschreibung bestimmt wird.

Als bevorzugtes Polypropylen wird im Rahmen der vorliegenden Erfindung ein isotaktisches Propylenhomopolymeres eingesetzt oder ein Copolymeres das zum überwiegenden Anteil aus Propyleneinheiten zusammengesetzt ist. Solche Polymeren besitzen üblicherweise einen Schmelzpunkt von mindestens 140 °C, bevorzugt von mindestens 160 °C. Isotaktisches Polypropylen mit einem n-heptanlöslichen Anteil von weniger als 15 Gew.-%,

Copolymere von Ethylen und propylen mit einem Ethylengehalt von weniger als 10 Gew.-% und Copolymere von Propylen mit anderen Alphaolefinen mit 4 bis 8 Kohlenstoffatomen und mit einem Gehalt dieser Alphaolefine von weniger als 10 Gew.-% stellen typische Beispiele für das bevorzugte thermoplastische Polypropylen dar.

Die bevorzugten thermoplastischen Polymeren haben zweckmäßigerweise einen Schmelzflußindex im Bereich von 0,5 g/10 min bis 8 g/10 min bei 230°C und 2,16 kp Belastung (DIN 53 735), insbesondere von 1,5 g/10 min bis 4 g/10 min.

Die Polymeren besitzen eine spezielle Molmassenverteilung, die dadurch gekennzeichnet ist, daß zwischen dem Zahlenmittelwert der Molmassenverteilung $M_n$ und dem Gewichtsmittelwert der Molmassenverteilung $M_w$ folgende Beziehung gelten sollte:

$$M_w = K \cdot M_n$$

Dabei soll der Faktor K einen Wert zwischen 2 und 5,5, insbesondere zwischen 3 und 4 annehmen. Der Gewichtsmittelwert liegt vorzugsweise zwischen 160 000 und 700 000 g/mol, insbesondere zwischen 200 000 und 350 000 g/mol. Die Folie besitzt eine Gesamtdicke von 15 bis 40 $\mu$m, bevorzugt von 20 bis 25 $\mu$m.

Die monoaxiale Orientierung der Folie erfolgt zweckmäßigerweise mit Hilfe von unterschiedlich schnellaufenden Rollen. Die Strecktemperatur liegt unter der Schmelztemperatur des Polypropylens wobei das Streckverhältnis zwischen 4,5 und 7, insbesondere zwischen 5 und 6,5, liegt. Zur Verbesserung der Haftungseigenschaften insbesondere der Bedruckungseigenschaften, kann die Folie vor der Aufrollung einer üblichen Oberflächenbehandlung (z. B. Coronabehandlung oder Flammbehandlung) unterzogen werden.

Falls erforderlich, kann die Folie der vorliegenden Erfindung mit einer oder weiteren Deckschichten versehen sein, z. B. zur Verbesserung ihres Laufverhaltens. Solche Schichten können z. B. durch Coextrusion der erfindungsgemäßen Basisschicht mit anderen Polymeren erhalten werden. Bei diesen Schichten handelt es sich in der Regel um übliche Deckschichtmaterialien, wie sie auch bei biaxial orientierten Polypropylenfolien eingesetzt werden.

Die Ausrüstung der erfindungsgemäßen Folien mit üblichen Additiven in üblichen Mengen (Gleitmittel Antistatika, Nukleierungsmittel, Antiblockmittel) ist möglich.

Die Dicke der anderen Polymerschichten liegt zwischen 0,3 und 1,5 $\mu$m, insbesondere bei 0,5 bis 1 $\mu$m.

Als Gleitmittel haben sich insbesondere Carbonsäureamide und Polydimethylsiloxane bewährt.

N,N-Bisethoxyalkylamine eignen sich besonders zur antistatischen Ausrüstung. Als Nukleierungsmittel haben sich insbesondere Kondensationsprodukte aus Sorbit mit Benzaldehyd oder einem seiner Derivate bewährt, wobei die Zusatzmenge bevorzugt zwischen 0,1 und 0,5 Gew.-% liegt. Als Antiblockmittel eignen sich anorganische oder organische Teilchen, die einen mittleren Teilchendurchmesser von 0,5 bis 4 $\mu$m, insbesondere 1 bis 2 $\mu$m, aufweisen.

Bestimmungsmethoden

Mittlere Molmassen $M_n$ und $M_w$ des Polypropylens wurden mit dem Hochtemperatur-Gelpermeationschromatographen ALC/GPC 200 der Firma Waters (USA) bestimmt. Die Messung erfolgte bei 135 °C mit Trichlorbenzol als Lösungsmittel. Die Durchflußgeschwindigkeit betrug 1 ml/min.

Twist-Eigenschaften

Mit der zu beurteilenden Folie wurden Bonbons mittels Dreheinschlag eingeschlagen. Die Qualität des Dreheinschlags wurde mit unbewaffnetem Auge direkt nach dem Einschlag und über einen Zeitraum von 7 Tagen im Abstand von 24 h beurteilt. Es wurde geprüft, ob ein selbständiges Aufdrehen der Zwirbel auftritt.

Weiterhin wurden jeweils 100 mittels Dreheinschlag eingeschlagene Bonbons auf einen Rütteltisch gegeben und 48 h gerüttelt. Im Anschluß daran wurde geprüft, ob sich Bonbons aus ihrer Verpackung gelöst haben.

Die Erfindung soll an nachfolgenden Beispielen erläutert werden. Es wurden jeweils 22 $\mu$m dicke Folien (Gesamtdicke) hergestellt.

Beispiel 1

Es wurde ein Polypropylen eingesetzt, das ein $M_w$ von 220 000 g/mol und ein $M_n$ von 65 000 g/mol aufwies. Der Faktor K betrug 3,38. Als Additive wurden dem Polypropylen zugesetzt:

0,05 Gew.-% Calciumstearat als Neutralisationsmittel,

0,1 Gew.-% [R]Irganox 1010 der Firma Ciba-Geigy als Stabilisator (phenolischer Typ),

0,1 Gew.-% Erucasäureamid als Gleitmittel,

0,15 Gew.-% N,N-bisethoxyalkylamin als Antistatikum und

0,3 Gew.-% $SiO_2$ mit einem mittleren Teilchendurchmesser von 2 $\mu$m als Antiblockmittel.

Aus dem Rohstoff wurde eine monoaxial orientierte Folie hergestellt. Das Streckverhältnis betrug 5,5. Die Strecktemperatur betrug 130 °C. Die bleibende Dehnung quer zur Orientierungsrichtung betrug 74 %.

Optik und Twisteigenschaften der Folien waren sehr gut.

Beispiel 2

Beispiel 1 wurde wiederholt, wobei der Polypropylenrohstoff als weiteres Additiv 0,15 Gew.-% Dibenzylidensorbit als Nukleierungsmittel enthielt. Die Folie zeigte ein entsprechend gutes Eigenschaftsbild wie Beispiel 1, wobei die bleibende Dehnung quer zur Orientierungsrichtung mit 77 % gemessen wurde.

Beispiel 3

Es wurde eine coextrudierte, dreischichtige Folie hergestellt. Die Basisschicht bestand aus dem Polypropylenrohstoff aus Beispiel 1, wobei auf die Ausrüstung mit $SiO_2$ verzichtet wurde. Die Deckschichten bestanden im wesentlichen aus einem statistischen Ethylen-Propylen-Copolymerisat ($C_2$-Gehalt 4 Gew.-%) und enthielten als Antiblockmittel 0,2 Gew.-% eines $SiO_2$ einer mittleren Teilchengröße von 2 $\mu$m als Antiblockmittel. Die Dicke der Deckschichten betrug jeweils 0,6 $\mu$m. Streckverhältnis und Strecktemperatur entsprachen den Bedingungen von Beispiel 1. Die bleibende Dehnung der Folie quer zur Orientierungsrichtung betrug 71 %.

Optik und Twisteigenschaften der Folie waren sehr gut.

Bestimmung der bleibenden Dehnung

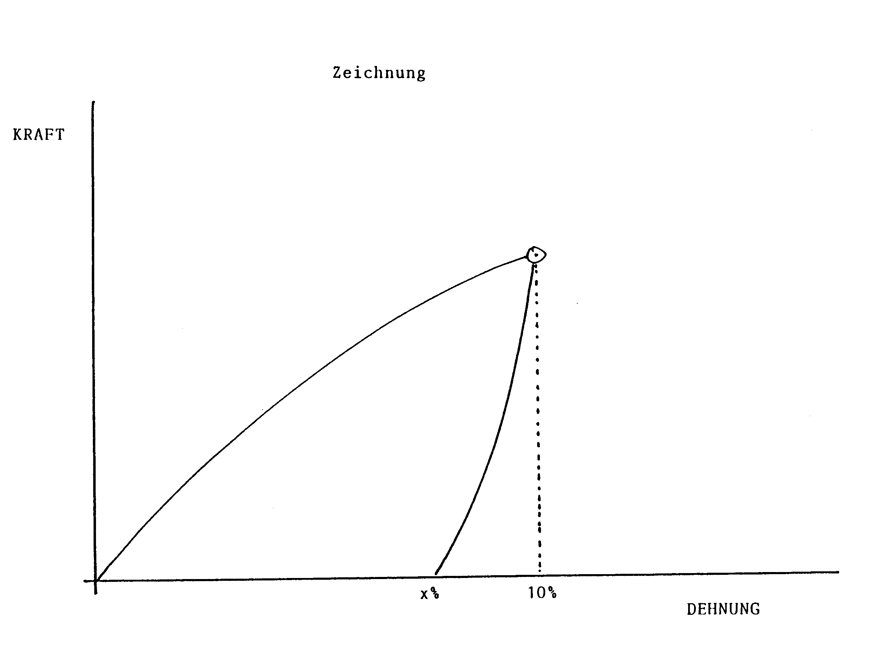

Aus der Folie wurde ein 15 mm breiter Folienstreifen quer zur Orientierungsrichtung geschnitten und in eine Zugprüfmaschine eingespannt, wobei die Einspannlänge 200 mm betrug. Die Probe wurde dann mit 20 mm/min entsprechend 10 %/min gedehnt. Nach einer Dehnung von 10 %, d. h. bei einer Probenlänge von 220 mm, wurde die Probe automatisch mit gleicher Geschwindigkeit entspannt. Die Bestimmung der bleibenden Dehnung aus dem Kraft-Dehnungs-Diagramm ist in der beigefügten Figur schematisch dargestellt. Die bleibende Dehnung berechnet sich dabei gemäß

$$D_b = \frac{x \, \%}{10 \, \%} \cdot 100 \, \%$$

**Patentansprüche**

1. Transparente Dreheinschlagfolie aus Polypropylen, dadurch gekennzeichnet, daß sie monoaxial orientiert ist und eine bleibende Dehnung quer zur Orientierungsrichtung von größer als 45 % besitzt und durch Orientierung mit einem Streckverhältnis zwischen 4,5 und 7 erhältlich ist, wobei die bleibende Dehnung wie beschrieben in dem letzten Absatz der Beschreibung bestimmt wird.

2. Folie nach Anspruch 1, dadurch gekennzeichnet, daß sie eine bleibende Dehnung quer zur Orientierungsrichtung von mehr als 65 % besitzt.

3. Folie nach Anspruch 1 oder 2, dadurch gekennzeichnet, daß das Polypropylen eine Molmassenverteilung besitzt, bei der zwischen dem Zahlenmittelwert der Molmassenverteilung $M_n$ und dem Gewichtsmittelwert der Molmassenverteilung $M_w$ folgende Beziehung gilt:

$$M_w = K \cdot M_n$$

wobei der Faktor K einen Wert zwischen 2 und 5,5 annimmt, wobei $M_n$ und $M_w$ mittels GPC (135°C, Trichlorbenzol, 1 ml/min) bestimmt werden.

4. Folie nach Anspruch 3, dadurch gekennzeichnet, daß der Gewichtsmittelwert $M_w$ zwischen 160 000 und 700 000 g/mol und liegt.

5. Folie nach einem der Ansprüche 1 bis 4, dadurch gekennzeichnet, daß sie eine Gesamtdicke von 15 bis 40 $\mu$m besitzt.

6. Folie nach einem der Ansprüche 1 bis 5, dadurch gekennzeichnet, daß sie ein- oder beidseitig funktionelle Deckschichten mit einer Dikke zwischen 0,3 und 1,5 $\mu$m trägt.

7. Verwendung einer Folie nach einem der Ansprüche 1 bis 6 zur Verpackung von Nahrungsmitteln.

8. Verwendung einer Folie nach einem der Ansprüche 1 bis 6 als Dreheinschlagsfolie.

**Claims**

1. Transparent twist-wrap film of polypropylene, characterized in that it has been monoaxially oriented and has a permanent set transversely to the orientation direction of greater than 45% and is obtainable by orientation at a stretching ratio of between 4.5 and 7, the permanent set being determined as described in the final paragraph of the description.

**2.** Film according to Claim 1, characterized in that it has a permanent set transversely to the orientation direction of greater than 65%.

**3.** Film according or Claim 1 or 2, characterized in that the polypropylene has a molecular weight distribution in which the following relationship applies between the number average molecular weight distribution $M_n$ and the weight average molecular weight distribution $M_w$:

$$M_w = K \cdot M_n$$

where the factor K adopts a value of between 2 and 5.5, where $M_n$ and $M_w$ are determined by GPC (135°C, trichlorobenzene, 1 ml/min).

**4.** Film according to Claim 3, characterized in that the weight average value $M_w$ is between 160,000 and 700,000 g/mol.

**5.** Film according to one of Claims 1 to 4, characterized in that it has an overall thickness of from 15 to 40 $\mu$m.

**6.** Film according to one of Claims 1 to 5, characterized in that it carries functional top layers having a thickness of between 0.3 and 1.5 $\mu$m on one or both sides.

**7.** Use of a film according to one of Claims 1 to 6 for packaging foodstuffs.

**8.** Use of a film according to one of Claims 1 to 6 as a twist-wrap film.

## Revendications

**1.** Pellicule transparente d'emballage par torsion, à base de polypropylène, caractérisée en ce qu'elle est orientée monoaxialement et présente un allongement rémanent, transversalement par rapport à la direction d'orientation, de plus de 45 %, et peut être obtenue par orientation avec un rapport d'étirage compris entre 4,5 et 7, l'allongement rémanent étant déterminé comme décrit dans le dernier alinéa de la description.

**2.** Pellicule selon la revendication 1, caractérisée en ce qu'elle présente un allongement rémanent, perpendiculairement à la direction de l'orientation, de plus de 65 %.

**3.** Pellicule selon la revendication 1 ou 2, caractérisée en ce que le polypropylène a une distribution de masses moléculaires dans laquelle la relation suivante:

$$M_w = K.M_n$$

existe entre la valeur moyenne en nombre de la distribution de masses moléculaires $M_n$ et la valeur moyenne en poids de la distribution de masses moléculaires $M_w$, le facteur K ayant une valeur comprise entre 2 et 5,5, $M_n$ et $M_w$ étant déterminés par chromatographie par perméation de gel (GPC, 135°C, trichlorobenzène, 1 ml/min).

**4.** Pellicule selon la revendication 3, caractérisée en ce que la valeur moyenne en poids $M_w$ est comprise entre 160 000 et 700 000 g/mole.

**5.** Pellicule selon l'une des revendications 1 à 4, caractérisée en ce qu'elle a une épaisseur totale de 15 à 40 $\mu$m.

**6.** Pellicule selon l'une des revendications 1 à 5, caractérisée en ce qu'elle porte, sur une face ou sur les deux, des couches de recouvrement fonctionnelles ayant une épaisseur comprise entre 0,3 et 1,5 $\mu$m.

**7.** Utilisation d'une pellicule selon l'une des revendications 1 à 6, pour l'emballage de produits alimentaires.

**8.** Utilisation d'une pellicule selon l'une des revendications 1 à 6, en tant que pellicule d'emballage par torsion.

EP 0 432 452 B1